(19) Europäisches Patentamt
European Patent Office
Office européen des brevets

(11) **EP 3 594 653 B1**

(12) **EUROPEAN PATENT SPECIFICATION**

(45) Date of publication and mention
of the grant of the patent:
**19.05.2021 Bulletin 2021/20**

(21) Application number: **18764404.2**

(22) Date of filing: **06.03.2018**

(51) Int Cl.:
*E03B 7/00* *(2006.01)*          *F17D 5/06* *(2006.01)*
*G01M 3/24* *(2006.01)*          *G06Q 10/00* *(2012.01)*
*G06Q 30/02* *(2012.01)*

(86) International application number:
**PCT/JP2018/008517**

(87) International publication number:
**WO 2018/164102 (13.09.2018 Gazette 2018/37)**

(54) **DIAGNOSIS COST OUTPUT DEVICE, DIAGNOSIS COST OUTPUT METHOD, AND DIAGNOSIS COST OUTPUT**

DIAGNOSEKOSTENAUSGABEVORRICHTUNG, DIAGNOSEKOSTENAUSGABEVERFAHREN UND DUAGNOSEKOSTENAUSGABEPROGRAMM

DISPOSITIF D'ESTIMATION DE COÛT DE DIAGNOSTIC, PROCÉDÉ D'ESTIMATION DE COÛT DE DIAGNOSTIC, ET PROGRAMME D'ORDINATEUR D'ESTIMATION DE COÛT DE DIAGNOSTIC

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.03.2017 JP 2017045550**

(43) Date of publication of application:
**15.01.2020 Bulletin 2020/03**

(73) Proprietor: **NEC Corporation**
**Tokyo 108-8001 (JP)**

(72) Inventors:
• **SHINODA Shigeki**
**Tokyo 108-8001 (JP)**
• **KIKUCHI Katsumi**
**Tokyo 108-8001 (JP)**
• **INOUE Hirofumi**
**Tokyo 108-8001 (JP)**

(74) Representative: **Betten & Resch**
**Patent- und Rechtsanwälte PartGmbB**
**Maximiliansplatz 14**
**80333 München (DE)**

(56) References cited:
**WO-A1-2012/059108      WO-A1-2015/129031**
**WO-A1-2016/114238      JP-A- 2015 094 665**
**JP-A- 2015 145 804      US-A1- 2013 262 068**
**US-A1- 2013 332 397**

• **RAMON PÃ REZ ET AL: "Methodology for leakage isolation using pressure sensitivity analysis in water distribution networks", CONTROL ENGINEERING PRACTICE, PERGAMON PRESS, OXFORD, GB, vol. 19, no. 10, 2 June 2011 (2011-06-02), pages 1157-1167, XP028274795, ISSN: 0967-0661, DOI: 10.1016/J.CONENGPRAC.2011.06.004 [retrieved on 2011-06-21]**

**Description**

[Technical Field]

The present invention relates to a diagnosis cost output device, a diagnosis cost output method, and a computer-readable recording medium.

[Background Art]

Degradation of a pipe where fluid such as water flows progresses due to aging degradation, a load applied from an outside, and the like. Due to progress of degradation of a pipe, an event such as leakage of fluid from a pipe or breakage referred to as burst may occur. Therefore, degradation diagnosis of a pipe is performed. In degradation diagnosis of a pipe, a presence/absence of leakage of fluid from a pipe, and the like are inspected.

Degradation diagnosis of a pipe may require a large expense, a time, and the like. In order to reduce a cost such as an expense and a time required for degradation diagnosis of a pipe, estimation of a cost required for degradation diagnosis of a pipe, and the like are previously performed.

PTL 1 describes a water leakage inspection planning device and the like. In a water leakage inspection plan described in PTL 1, it is described that a plan is made with respect to a total cost including a sum of a water leakage cost and an inspection cost in such a way that the total cost is minimum

US2013/0262068 deals with a method for optimizing the placement of leak detection sensors, such as pressure sensors, flow meters or tank level detectors, in order to minimize purchase and installation costs and by taking into account detection time and accuracy. Several sensor placements are tested by simulating different leak scenarios and giving each configuration a score. The configuration with the highest score is chosen.

[Citation List]

[Patent Literature]

[PTL 1] Japanese Unexamined Patent Application Publication No. 2015-94665

[Summary of Invention]

[Technical Problem]

When degradation diagnosis of a pipe is performed, diagnosis may be performed by using a measurement instrument such as a sensor attached to a pipe or the like, and the like. In this case, when a cost required for degradation diagnosis of a pipe is calculated, it is desirable to include a cost required for installing the measurement instrument described above, a cost required for performing degradation diagnosis of a pipe by using the measurement instrument, and the like. However, in PTL 1, these points are not necessarily considered.

The present invention has been made in order to solve the problem described above, and a main object thereof is to provide a diagnosis cost output device and the like capable of determining a diagnosis cost.

[Solution to Problem]

In one aspect of the invention, a diagnosis cost output device includes a device according to claim 1.

In one aspect of the invention, a diagnosis cost output method includes a method according to claim 9.

In one aspect of the invention, a a diagnosis cost output program that causes a computer to execute the method according to claim 9.

[Advantageous Effects of Invention]

According to the present invention, a diagnosis cost output device capable of determining a diagnosis cost can be provided.

[Brief Description of Drawings]

Fig. 1 is a diagram illustrating a diagnosis cost output device according to a first example embodiment of the present invention.

Fig. 2 is a diagram illustrating an example of a diagnosis device and a measurement instrument being targets of a diagnosis cost output device according to each example embodiment of the present invention.

Fig. 3 is a diagram illustrating a relation between a pipe diameter of a pipe and a detectable distance of leakage and the like for each type of pipe.

Fig. 4 is a diagram illustrating a relation between a time for measurement through a measurement instrument and a distance from the measurement instrument at a point where leakage of a pipe is occurring.

Fig. 5 is a diagram illustrating a relation between a distance from a measurement instrument at a point where leakage of a pipe is occurring and a time for measurement through the measurement instrument

Fig. 6 is a diagram illustrating one example of a relation between an installation spacing of measurement instruments and a diagnosis cost.

Fig. 7 is s flowchart illustrating an operation of the diagnosis cost output device according to the first example embodiment of the present invention.

Fig. 8 is a diagram illustrating a diagnosis cost output device according to a second example embodiment of the present invention.

Fig. 9 is a diagram illustrating a relation of an expense reduced by a diagnosis device.

Fig. 10 is a diagram illustrating a relation between a reduced expense and an installation spacing of measurement instruments.

Fig. 11 is a flowchart illustrating an operation of the diagnosis cost output device according to the second example embodiment of the present invention.

Fig. 12 is a diagram illustrating a diagnosis cost output device according to a third example embodiment of the present invention.

Fig. 13 is a diagram illustrating one example of the diagnosis cost output device according to the third example embodiment of the present invention.

Fig. 14 is a diagram illustrating another example of the diagnosis cost output device according to the third example embodiment of the present invention.

Fig. 15 is a diagram illustrating one example of an information processing device that achieves a diagnosis cost output device and the like according to each of the example embodiments of the present invention.

[Example Embodiment]

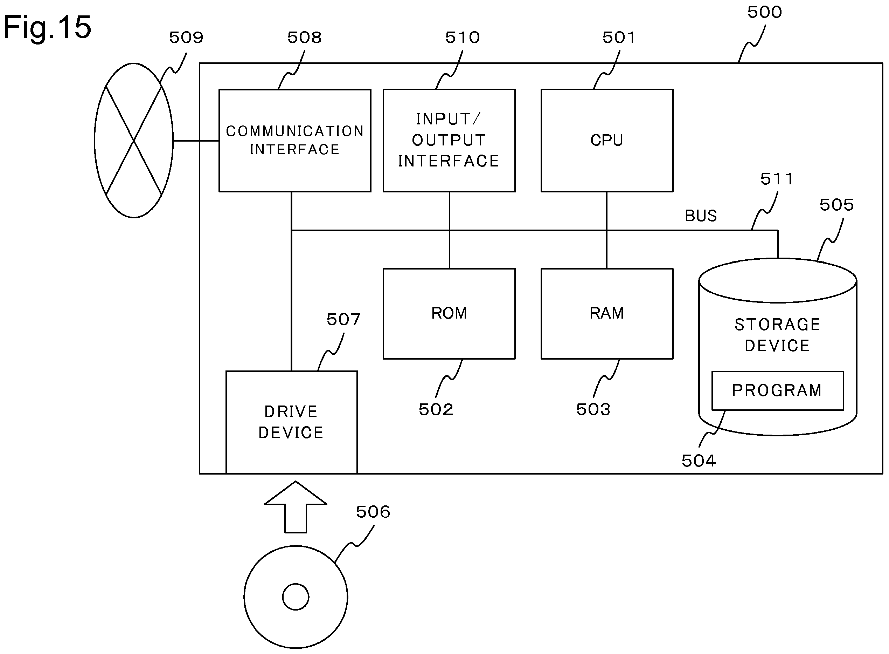

Example embodiments of the present invention are described with reference to the accompanying drawings. In the example embodiments of the present invention, components of each device indicate a block of a functional unit. A part or all of components of each device are achieved by, for example, any combination of information processing device 500 as illustrated in Fig. 15 and a program. Information processing device 500 includes, as one example, the following configuration.

- Central processing unit (CPU) 501,
- Read only memory (ROM) 502,
- Random access memory (RAM) 503,
- Program 504 loaded on RAM 503,
- Storage device 505 that stores program 504,
- Drive device 507 that executes reading/writing on/from recording medium 506,
- Communication interface 508 for connection to communication network 509,
- Input/output interface 510 that inputs/outputs data,
- Bus 511 that connects components.

Components of each device in example embodiments can be achieved by acquiring and executing, by using CPU 501, program 504 that achieves these functions. Program 504 that achieves functions of components of each device is previously stored, for example, on storage device 505 or RAM 503 and is read by CPU 501, as necessary. Program 504 may be supplied to CPU 501 via communication network 509, or may be previously stored on recording medium 506 and then supplied to CPU 501 by reading the program by using drive device 507.

A method for achieving each device includes various modified examples. Each device may be achieved, for example, by any combination of information processing device 500 and a program separate for each component. A plurality of components included in each device may be achieved by any combination of one information processing device 500 and a program.

A part or all of components of each device are achieved by a general-purpose or dedicated circuit including a processor and the like, or any combination thereof. These may include a single chip or include a plurality of chips connected via a bus. A part or all of components of each device may be achieved by a combination of the circuit described above or the like and a program.

When a part or all of components of each device are achieved by a plurality of information processing devices, circuits, and the like, the plurality of information processing devices, circuits, and the like may be arranged in a centralized manner or distributed manner. For example, an information processing device, a circuit, and the like may be achieved as a form in which each of the information processing devices and circuits are connected to each other via a communication network, such as a client and server system, and a cloud computing system.

(First Example Embodiment)

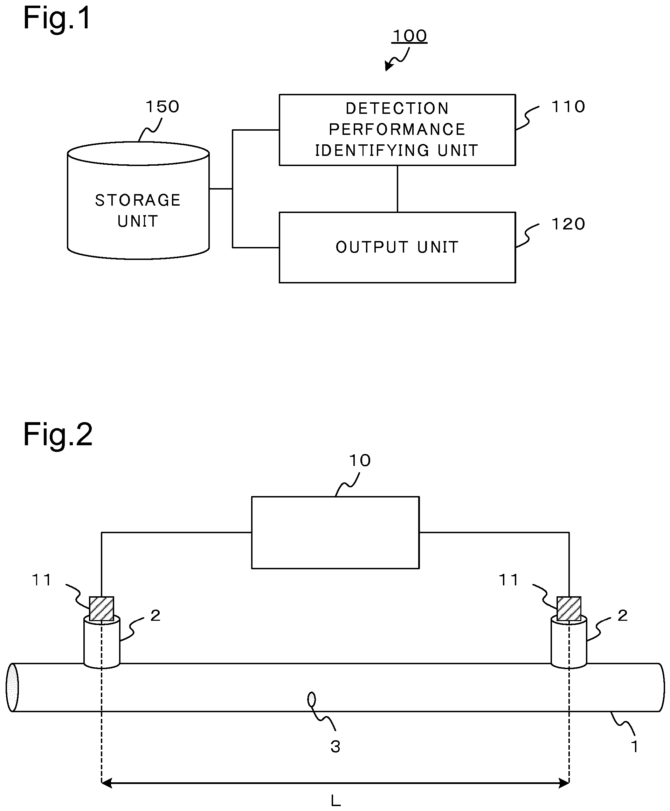

First, a first example embodiment of the present invention is described. Fig. 1 is a diagram illustrating a diagnosis cost ouptput device according to the first example embodiment of the present invention.

As illustrated in Fig. 1, diagnosis cost output device 100 according to the first example embodiment of the present invention includes at least detection performance identifying unit 110 and output unit 120. Detection performance identifying unit 110 identifies a measuring time required for leakage detection with respect to an installation spacing of sensors, on the basis of information affecting vibration propagation characteristics of a pipe. Output unit 120 outputs a diagnosis cost with respect to the installation spacing on the basis of an installation cost of a sensor and a measuring cost generated by leakage detection during the measuring time.

Diagnosis cost output device 100 may include storage unit 150 illustrated in Fig 1. Storage unit 150 stores information relating to at least an installation cost and a measuring cost. Details of information about information relating to an installation cost and a measuring cost are described later. Diagnosis cost output device 100 may include an acquisition unit (not illustrated) that acquires information about information relating to an installation cost and a measuring cost, together with storage unit 150 or instead of storage unit 150.

Diagnosis cost output device 100 in the present example embodiment determines, by using a measurement instrument such as a sensor attached to a pipe, a diagnosis cost in a case where diagnosis relating to degradation (hereinafter, referred to as "degradation diagnosis") of a pipe including a presence/absence of leakage from the pipe and the like is performed. First, an example of a diagnosis device used for degradation diagnosis of a pipe is described.

Fig. 2 illustrates one example of diagnosis device 10 to be a target of output of a diagnosis cost through diagnosis cost output device 100. Diagnosis device 10 performs, by using a measurement instrument such as measurement instrument 11 attached to a pipe, degradation diagnosis of the pipe including determination of a presence/absence of leakage from the pipe and the like. In other words, diagnosis device 10 diagnoses a state of a pipe including a presence/absence of leakage from the pipe and the like on the basis of a result from measurement through a plurality of measurement instruments 11. Each of a plurality of measurement instruments 11 detects a vibration that propagates along pipe 1 and in fluid inside pipe 1. As long as the measurement instrument 11 has frequency characteristics and a sensitivity capable of detecting a vibration due to leakage, its type does not matter. As measurement instrument 11, for example, a vibration sensor, a water pressure sensor, a hydrophone, or the like is used.

In Fig. 2, as one example, two measurement instruments 11 are illustrated. Hereinafter, a distance L between two measurement instruments 11 is referred to as an "installation spacing". The number of measurement instruments 11 used by diagnosis device 10 is not specifically limited. A required number of measurement instruments 11 are appropriately used according to a length of pipe 1 to be a target of diagnosis through diagnosis device 10.

Measurement instrument 11 is attached, for example, to valve 2 or the like such as a fire hydrant valve and a water faucet easily accessible from an outside when pipe 1 is embedded. When pipe 1 is provided in a place with which pipe 1 can be brought into direct contact, measurement instrument 11 may be directly attached to an outer face of pipe 1 or the like.

As described above, degradation of a pipe includes leakage of fluid from a pipe. Leakage of fluid from a pipe generally occurs due to generation of leakage hole 3 as described above in pipe 1. In the following example embodiments, it is assumed, as an example, that diagnosis device 10 regards mainly leakage detection of fluid from pipe 1 as a target of degradation diagnosis. Diagnosis device 10 determines that a problem such as leakage is occurring in pipe 1 when a magnitude of a vibration detected by measurement instrument 11 satisfies a previously determined condition (e.g., exceeds a previously determined magnitude). Fig. 2 illustrates an example in which leakage hole 3 is formed in pipe 1.

In diagnosis device 10, as a magnitude of a vibration, for example, a displacement, a speed, and an acceleration of a vibration, and the like are used. However, as a magnitude of a vibration, another indicator relating to a vibration may be used. Diagnosis device 10 may perform degradation diagnosis of a type different from leakage detection on the basis of a magnitude of a vibration and the like.

Diagnosis device 10 identifies a position where degradation such as leakage hole 3 has occurred, on the basis of a time difference until a vibration (hereinafter, referred to as a "leakage vibration") due to degradation of pipe 1 including leakage of fluid and the like arrives at two measurement instruments 11. The time difference is determined on the basis of a correlation between waveforms representing vibrations measured in the two measurement instruments 11.

Diagnosis cost output device 100 according to the present example embodiment determines, as a diagnosis cost, an expense required when degradation diagnosis of leakage detection and the like of pipe 1 is performed by diagnosis device 10. Diagnosis cost output device 100 according to the present example embodiment mainly determines, as a diagnosis cost, a sum of an expense required for installing measurements instrument 11 and an expense required when degradation diagnosis is performed by diagnosis device 10. In other words, a diagnosis cost includes an expense required for installing measurements instrument 11 and an expense required when degradation diagnosis is performed by diagnosis device 10. An expense required for installing measurement instruments 11 is referred to also as an installation cost.

An expense required for installing measurement instruments 11 includes, for example, a labor cost of personnel for installing measurement instrument 11, an expense of equipment used for installing measurement instrument 11, and the like. An expense required when degradation diagnosis is performed by diagnosis device 10 includes, for example, an expense required for operating diagnosis device 10, a labor cost of personnel required when degradation diagnosis is performed by diagnosis device 10, and the like. An expense different from the expenses described above may be included in each of an expense required for installing measurement instruments 11 and an expense required when degradation diagnosis is performed by diagnosis device 10.

Hereinafter, a relation between degradation diagnosis of pipe 1 through diagnosis device 10 and an expense determined by diagnosis cost output device 100 is described.

In degradation diagnosis of a pipe using diagnosis device 10 described above, a water supply network is a main target. A water supply network generally includes a large number of pipes 1. Therefore, when a water supply network is a target of diagnosis through diagnosis device 10, it may be necessary for a large number of measurement instruments 11 to be attached to pipes 1 configuring the water supply network in such a way that a large range of pipes 1 are covered.

On the other hand, when degradation diagnosis of pipe 1 such as leakage detection is performed by diagnosis device 10 described above, an expense relating to diagnosis is desirably suppressed. Therefore, when degradation diagnosis of a pipe is performed by using diagnosis device 10, it is conceivable that an installation spacing among a plurality of measurement instruments 11 is increased. When the installation spacing among a plurality of measurement instruments 11 is increased, the number of measurement instruments 11 per unit length of a pipe is reduced. Therefore, there is a possibility that an expense necessary for installation of measurement instruments 11 may be reduced.

However, a leakage vibration that propagates along a pipe and in fluid flowing inside the pipe is attenuated according to a distance from a point where leakage has occurred. Therefore, when a position where measurement instrument 11 is disposed is separated from a point where leakage has occurred, a magnitude of a leakage vibration detected by measurement instrument 11 may not always satisfy the previously determined condition described above due to attenuation. For example, a magnitude of a leakage vibration may not exceed a previously determined magnitude.

In this case, when analyzing a vibration detected by measurement instrument 11, it may be difficult for diagnosis device 10 to discriminate a leakage vibration from a steady vibration generated by flowing of fluid in a pepe, other noises, and the like. In other words, when an installation spacing of measurement instruments 11 becomes large, diagnosis device 10 may not correctly determine a presence/absence of leakage. Also when a presence/absence of leakage is correctly determined, it may be difficult to perform diagnosis such as identification of a position where leakage has occurred.

Also when diagnosis such as determination of a presence/absence of leakage and identification of a position where leakage has occurred can be performed by diagnosis device 10, an influence of noise and the like is increased when an installation spacing of measurement instruments 11 becomes large. In this case, compared with when an installation spacing of measurement instruments 11 is relatively small, a long time may be required for measurement through measurement instrument 11 and the like.

In other words, in diagnosis through diagnosis device 10, an installation spacing of measurement instruments 11 generally has an upper limit in which appropriate degradation diagnosis such as appropriate detection of a leakage vibration is possible. When the installation spacing becomes large, a long time may be required for measurement even when appropriate degradation diagnosis is possible. As a result, an expense required for degradation diagnosis through diagnosis device 10 may increase. In other words, when an installation spacing of measurement instruments 11 is made small, an expense required for degradation diagnosis through diagnosis device 10 may be reduced.

In other words, it is assumed that when an installation spacing of measurement instruments 11 is appropriately determined, a total sum of an expense required for installing measurement instruments 11 and an expense required for degradation diagnosis through diagnosis device 10 can be reduced.

A relation between attenuation of a vibration that propagates along a pipe and an upper limit of an installation spacing of measurement instruments 11 in which a leakage vibration is detectable is further described. In the following description, an upper-limit distance of an installation spacing of measurement instruments 11 in which a leakage vibration is detectable is referred to as a "detectable distance". When the leakage vibration described above is detectable, it is indicated that, for example, a leakage vibration can be discriminated from noise and the like. When a leakage vibration is detectable, there may be a case in which a position where leakage has occurred can be identified by performing degradation diagnosis through diagnosis device 10.

A situation of attenuation of a vibration that propagates along a pipe is further described. Characteristics of attenuation of a vibration that propagates along a pipe are referred to as attenuation characteristics. Attenuation characteristics change, depending on a type of a pipe such as a material and a diameter, of a pipe, a type of fluid flowing in a pipe, a condition of a point where a pipe is embedded, and the like. Attenuation characteristics are determined, for example, experimentally. Alternatively, attenuation characteristics may be theoretically determined by using a model relating to a pipe. An attenuation characteristic $\alpha$ is determined by using an attenuation model represented in the following equation (1) as one example.
[Math. 1]

$$\alpha(a) = \frac{\omega}{c_f} \frac{\dfrac{\eta Ba}{Eh}}{\left\{1 + \left(\dfrac{2Ba}{Eh}\right)\right\}^{\frac{1}{2}}} \quad \cdots (1)$$

In an example of equation (1), a represents a diameter of a pipe, h represents a wall thickness of the pipe, E represents a Young's modulus of the pipe, and $\eta$ represents an attenuation ratio of the pipe. These are characteristics relating to a pipe. An attenuation ratio $\eta$ of a pipe indicates a degree of attenuation of a vibration. B represents a volume elasticity modulus of fluid, $c_f$ represents a sound velocity of the fluid, and $\omega$ represents an angular frequency of a vibration that propagates in the fluid. These are characteristics relating to fluid flowing in a pipe. In other words, the attenuation model described above depends on characteristics relating to a pipe and characteristics relating to fluid flowing in the pipe.

When attenuation characteristics are theoretically determined by using a model, a model different from equation (1) described above may be used as an attenuation model. Attenuation characteristics may be determined by combining an experimental method and a method using a model.

When the attenuation characteristic $\alpha$ acquired by using equation (1) or the like is used, a detectable distance $l_{det}$ is determined, for example, by using the following equation (2).
[Math. 2]

$$l_{det}(a) = \frac{1}{\alpha(a)} \ln\left(\frac{\beta \cdot S_{src}^2}{PSR_{th} \cdot N_{tot}^2}\right) \quad \cdots (2)$$

In an example of equation (2), $\alpha$ represents an attenuation characteristic represented by equation (1) and $S_{src}$ represents a magnitude of a vibration generated due to leakage at a point where leakage is occurring. Ntot represents a noise level. A noise level represents a magnitude of noise included in a signal indicating a vibration detected by measurement instrument 11. Noise includes, for example, a vibration due to a cause other than a leakage vibration, observation noise such as circuit noise of a measurement instrument, quantization noise generated when a signal measured by measurement instrument 11 is converted from an analog signal to a digital signal, and the like. A noise level is determined, for example, by actually measuring a dark vibration that is a vibration other than a leakage vibration in an environment where measurement instrument 11 is installed, equipment noise of measurement instrument 11, and the like. $PSR_{th}$ indicates a threshold in which it is determined that leakage is occurring. In other words, when a magnitude of a vibration detected by measurement instrument 11 is larger than a PSRth (or the magnitude is equal to or larger than a PSRth), it is determined that leakage that is degradation of pipe 1 is occurring. $\beta$ represents a constant and a value is appropriately determined, as necessary.

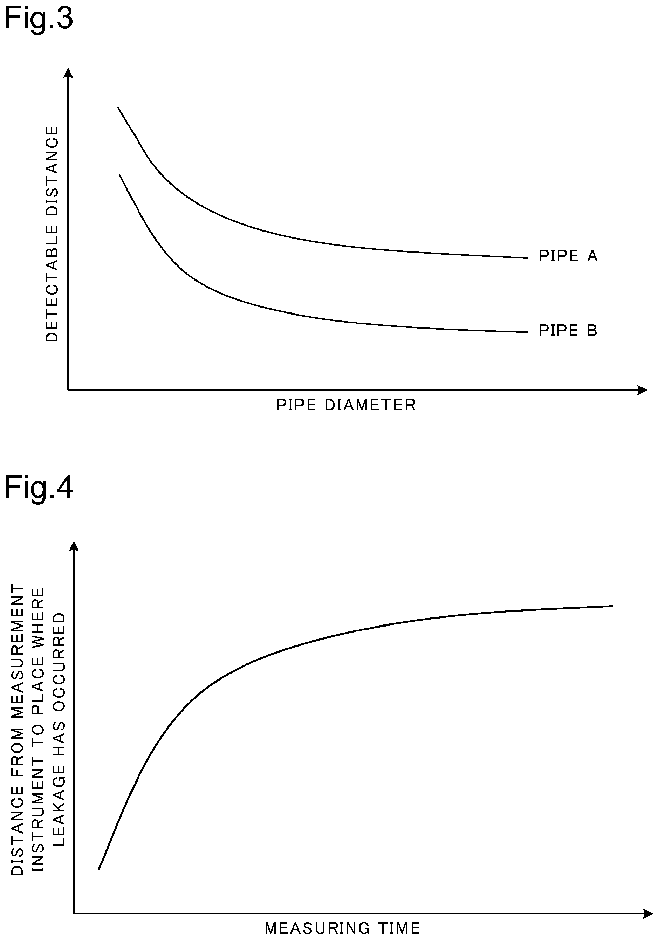

An example of a detectable distance is described by using Fig. 3 or the like. Fig. 3 is a conceptual diagram illustrating one example of a relation between a pipe diameter that is a diameter of a pipe and a detectable distance. In the example of Fig. 3, a horizontal axis indicates a pipe diameter and a vertical axis indicates a detectable distance determined by using equation (2) or the like. As illustrated in Fig. 3, as a pipe diameter becomes larger, a detectable distance tends to become smaller.

The relation between a pipe diameter and a detectable distance illustrated in Fig. 3 is different with respect to each type of a pipe. In other words, a relation between a pipe diameter and a detectable distance changes with respect to each of pipes different in an attenuation characteristic $\alpha$ in which a material and a wall thickness are different. Therefore, for each of pipes different in an attenuation characteristic $\alpha$, the relation between a pipe diameter of a pipe and a detectable distance as illustrated in Fig. 3 is determined. In a graph illustrated in Fig. 3, with regard to two pipes of pipe A and pipe B different in type, a relation between a pipe diameter and a detectable distance is determined.

When degradation diagnosis of pipe 1 such as leakage detection using diagnosis device 10 is performed, it is necessary for an installation spacing of measurement instruments 11 to be smaller than a detectable distance determined according to a type of pipe 1 to be a target of measurement as illustrated in Fig. 3, as described above.

On the other hand, also when an installation spacing of measurement instruments 11 is smaller than the detectable distance described above (i.e. leakage having occurred in pipe 1 between measurement instruments 11 is detectable), a time required for diagnosis changes, depending on the installation spacing of measurement instruments 11. In other words, when an installation spacing of measurement instruments 11 becomes large, a long time may be required for measurement relating to leakage detection in order to reduce an influence of noise and the like. A time required for diagnosis is related to an expense required when degradation diagnosis is performed by diagnosis device 10.

Fig. 4 illustrates a relation between a time (hereinafter, referred to as a "measuring time") required for measuring a leakage vibration generated along pipe 1 by using measurement instrument 11 and a distance from measurement instrument 11 to a place where a leakage vibration detectable by measurement instrument 11 by measuring the time has been generated. In a graph illustrated in Fig. 4, a horizontal axis indicates a measuring time required for measuring a leakage vibration by using measurement instrument 11. In the graph of Fig. 4, a vertical axis indicates a distance from measurement instrument 11 to a place where a leakage vibration detectable by measurement instrument 11 has been generated.

The graph illustrated in Fig. 4 is acquired, for example, by actually measuring a leakage vibration, a pseudo-vibration similar to a leakage vibration, and the like. For example, with regard to some distances or measuring times, a leakage vibration, a pseudo-vibration similar to the leakage vibration, and the like are actually measured and a time required for the measurement is determined, and thereby a relation between a specific distance from measurement instrument 11 to a place where leakage has occurred and a specific measuring time is acquired. This relation is acquired for a plurality of distances from measurement instrument 11 to a place where leakage has occurred, and thereby the graph illustrated in Fig. 4 is determined.

The graph illustrated in Fig. 4 may be determined by determining an approximate equation or the like on the basis of relations between some distances from measurement instrument 11 to a place where leakage has occurred and some measuring times. The graph illustrated in Fig. 4 may be theoretically determined on the basis of a model relating to attenuation or the like of a vibration and the like.

As illustrated in Fig. 4, with an increase in measuring time, a leakage vibration generated at a point at a relatively far distance from measurement instrument 11 (i.e. a point separate from measurement instrument 11) becomes detectable by measurement instrument 11. However, a distance from measurement instrument 11 to a place where a leakage vibration has been generated has an upper limit. In other words, a distance from measurement instrument 11 to a place where a leakage vibration, which is detectable by measurement instrument 11, has been generated converges, for example, according to the detectable distance described above and the like.

According to the relation illustrated in Fig. 4, also when a time for measurement through measurement instrument 11 is increased, a degree of an increase at a distance from measurement instrument 11 to a place where a leakage vibration, which is detectable by measurement instrument 11, has been generated may be small. In other words, when a distance from measurement instrument 11 to a place where a leakage vibration, which is detectable by measurement instrument 11, has been generated becomes large, a required measuring time tends to rapidly increase. An expense required for degradation diagnosis through diagnosis device 10 changes, depending on a measuring time through measurement instrument 11.

In other words, from a point of view of an expense required for degradation diagnosis through diagnosis device 10, it may be inefficient that an installation spacing of measurement instruments 11 is wide.

Diagnosis cost output device 100 according to the present example embodiment focuses, without limitation to an expense required for installing measurement instruments 11, on an expense required for degradation diagnosis through diagnosis device 10 and determines a diagnosis cost required for degradation diagnosis of pipe 1 such as leakage detection. When both an expense required for installing measurement instruments 11 and an expense required for degradation diagnosis through diagnosis device 10 are considered as a diagnosis cost, an installation spacing of measurement instruments 11 in which a diagnosis cost is reduced and the like can be easily determined.

Next, details of components of diagnosis cost output device 100 according to the present example embodiment are described.

Detection performance identifying unit 110 identifies, as described above, a measuring time required for leakage detection that is one degradation diagnosis of pipe 1 with respect to an installation spacing of measurement instruments 11, on the basis of information affecting vibration propagation characteristics of pipe 1. A measuring time required for leakage detection with respect to an installation spacing of measurement instruments 11 is a measuring time required when an installation spacing of measurement instruments 11 is determined as any spacing. A measuring time required for leakage detection with respect to an installation spacing of measurement instruments 11 is one indicator relating to detection performance of measurement instrument 11.

As described above, when an installation spacing of measurement instruments 11 changes, a measuring time of measurement instrument 11 required for leakage detection changes. In other words, when a measuring time of measurement instrument 11 required for leakage detection changes, an expense required for degradation diagnosis through diagnosis device 10 changes.

Therefore, detection performance identifying unit 110 identifies a measuring time required for leakage detection with respect to an installation spacing of measurement instruments 11 as information necessary for determining an expense required for degradation diagnosis of pipe 1 such as leakage detection. Detection performance identifying unit 110 may identify a measuring time required for leakage detection with respect to a specific installation spacing previously determined. Detection performance identifying unit 110 may identify a measuring time required for leakage detection with respect to a range of a certain installation spacing.

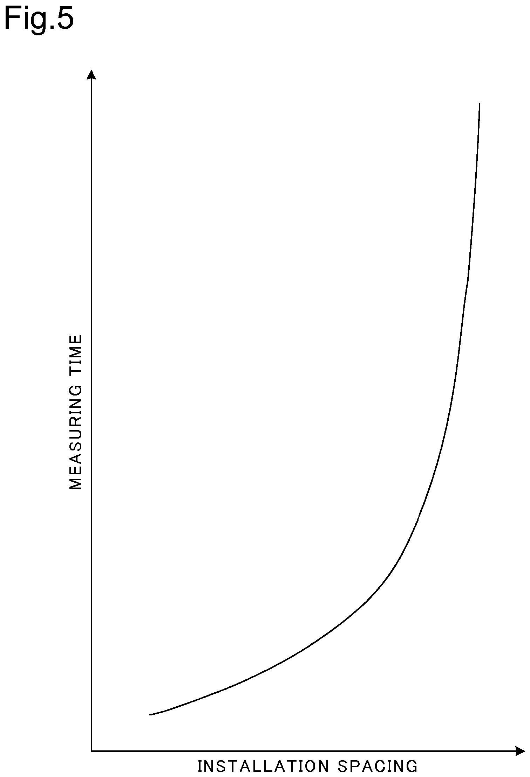

A measuring time required for leakage detection with respect to an installation spacing of sensors is illustrated as in Fig. 5 as one example. In a graph illustrated in Fig. 5, a horizontal axis indicates an installation spacing of measurement instruments 11 and a vertical axis indicates a measuring time required for leakage detection. In other words, at least a measuring time illustrated in Fig. 5 is required for a plurality of measurement instruments 11 attached to pipe 1 at a certain installation spacing. In the example illustrated in Fig. 5, it is indicated that when an installation spacing of measurement instruments 11 becomes large, a required measuring time increases.

An installation spacing of measurement instruments 11 in the graph illustrated in Fig. 5 corresponds to a distance from measurement instrument 11 in the graph illustrated in Fig. 4 to a place where a leakage vibration has been generated. In other words, the graph illustrated in Fig. 5 corresponds to a graph in which the vertical axis and the horizontal axis of the graph illustrated in Fig. 4 are switched.

The graph illustrated in Fig. 5 is determined, for example, by actually measuring a leakage vibration and a pseudo-vibration similar to a leakage vibration, similarly to the graph illustrated in Fig. 4. The graph illustrated in Fig. 5 may be determined on the basis of an approximate equation determined on the basis of an actually measured value and the like or a model and the like relating to attenuation and the like of a vibration.

A relation between an installation spacing of measurement instruments 11 and a measuring time required for leakage detection illustrated in Fig. 5 is different, depending on vibration propagation characteristics and the like of pipe 1 to be a target of leakage detection. In other words, a measuring time required for leakage detection with respect to an installation spacing of measurement instruments 11 changes, depending on, for example, an attenuation characteristic $\alpha$ described above and the like of pipe 1. Therefore, detection performance identifying unit 110 identifies a measuring time required for leakage detection with respect to an installation spacing of measurement instruments 11, on the basis of information affecting vibration propagation characteristics of a pipe.

Information affecting vibration propagation characteristics of a pipe is includes, for example, a type of pipe 1, a length of pipe 1, and a peripheral environment of a point where pipe 1 is embedded. A type of pipe 1 is determined on the basis of a material, a wall thickness, a pipe diameter, and the like of pipe 1. As information affecting vibration propagation characteristics of pipe 1, a parameter used in equation (1) or equation (2) described above may be included. Detection performance identifying unit 110 identifies, on the basis of these pieces of information affecting vibration propagation characteristics of pipe 1, a measuring time required for leakage detection with respect to an installation spacing of measurement instruments 11, for each of pipes different, for example, in vibration propagation characteristics. In other words, a measuring time is identified for each type of pipes 1 different, for example, in material, diameter, and the like. In the following description, information affecting vibration propagation characteristics of pipe 1 that is specific may be referred to as a measurement condition.

Information affecting vibration propagation characteristics of a pipe used by detection performance identifying unit 110 is not limited to the conditions described above. A measuring time may change, depending on a time zone in which measurement is performed by measurement instrument 11. As one example, in a daytime time zone, generally, environment noise tends to be loud. In measurement through measurement instrument 11, environment noise may have an influence as noise. Therefore, in a daytime time zone, a measuring time tends to increase.

Therefore, information affecting vibration propagation characteristics of pipe 1 includes a time zone in which measurement is performed by measurement instrument 11. Detection performance identifying unit 110 identifies measuring times required for leakage detection according to time zones in which measurement is performed by measurement instrument 11. Additional information different from the information described above may be used as information affecting vibration propagation characteristics of pipe 1, as necessary.

Detection performance identifying unit 110 acquires information affecting vibration propagation characteristics of pipe 1 and information for specifying a measurement condition relating to a pipe to be a target of leakage detection, for example, via an input means and a communication network that are not illustrated. Information affecting vibration propagation characteristics of pipe 1 such as a parameter used in equation (1) or equation (2) described above may be previously stored on storage unit 150 illustrated in Fig. 1 or the like, for example. Detection performance identifying unit 110 acquires these pieces of information from storage unit 150, as necessary, and refers to the acquired information.

Storage unit 150 is achieved, for example, by storage device 505 of information processing device 500. Storage unit 150 may be achieved by an external storage device and the like connected to diagnosis cost output device 100 via a wired or wireless communication network.

Detection performance identifying unit 110 identifies, by using various methods, a measuring time required for leakage detection with respect to an installation spacing of measurement instruments 11 as in the graph illustrated in Fig. 5.

As one example, detection performance identifying unit 110 identifies a measuring time required for leakage detection with respect to an installation spacing of measurement instruments 11, by using a result actually measured previously by measurement instrument 11.

An actually measured result is determined, for example, as follows. First, by using a plurality of measurement instruments 11 installed at a specific spacing, a vibration that propagates along pipe 1 in which leakage is occurring (or a pseudo-vibration corresponding to a leakage vibration is being added) is detected, for example, for each measurement condition described above. Detection of a vibration is performed at a plurality of times, for example, by changing a time for measurement.

In this case, it is assumed that when a measuring time is short, leakage is not detected, and when a measuring time is long, leakage is detected. Therefore, for example, a minimum time in which leakage is detected is a measuring time required for leakage detection with respect to an installation spacing. Detection performance identifying unit 110 identifies a measuring time required for leakage detection with respect to an installation spacing of measurement instruments 11, on the basis of a measuring time determined as described above.

A result actually measured previously is stored, for example, on storage unit 150. As one example, an actually measured result is stored on storage unit 150 for each measurement condition in a format of a table indicating a relation between an installation spacing and a measuring time required for leakage detection. In this case, detection performance identifying unit 110 selects, for example, a related table in accordance with a specified measurement condition. Detection performance identifying unit 110 refers to a measuring time actually measured for an installation spacing of measurement instruments 11 stored on the table and sets the referred measuring time as a measuring time required for leakage detection with respect to an installation spacing of measurement instruments 11.

When an actually measured value is used, actual measurement may have been performed with respect to only a specific installation spacing of measurement instruments 11. It may be necessary for detection performance identifying unit 110 to identify a measuring time required for leakage detection with respect to another installation spacing different from the installation spacing having been actually measured. In this case, detection performance identifying unit 110 may identify, on the basis of an actually measured value, a measuring time required for leakage detection with respect to another installation spacing different from an installation spacing of measurement instruments 11 that has been actually measured.

It is assumed that, for example, a measuring time required for leakage detection with respect to a plurality of installation spacings of measurement instruments 11 is actually measured previously. In this case, detection performance identifying unit 110 may generate, on the basis of a result actually measured in this manner, an approximate equation indicating a relation between an installation spacing of measurement instruments 11 and a measuring time required for leakage detection.

Detection performance identifying unit 110 may use a generated approximate equation when identifying a measuring time required for leakage detection with respect to another installation spacing different from an installation spacing having been actually measured. Detection performance identifying unit 110 may identify a measuring time required for leakage detection with respect to a specified installation spacing of measurement instruments 11, by using an approximate equation previously generated separately or the like.

When a model representing a relation between an installation spacing of measurement instruments 11 and a measuring time required for leakage detection or the like is usable, detection performance identifying unit 110 may identify, by using the model, a measuring time required for leakage detection with respect to an installation spacing of measurement instruments 11. In this case, a model representing a relation between an installation spacing of measurement instruments 11 and a measuring time required for leakage detection may be previously generated and stored on storage unit 150 or may be appropriately generated by detection performance identifying unit 110, as necessary. Detection performance identifying unit 110 may identify a measuring time required for leakage detection with respect to an installation spacing of measurement instruments 11, by using both an actually measured value and a model or the like in combination.

It is assumed that a measuring time required for leakage detection with respect to an installation spacing of measurement instruments 11 has been identified with respect to a specific measurement condition. In this case, detection performance identifying unit 110 may identify, by using a result identified with respect to the measurement condition, a measuring time for an installation spacing of measurement instruments 11 with respect to another measurement condition.

Output unit 120 outputs a diagnosis cost with respect to an installation spacing of measurement instruments 11, on the basis of an installation cost of measurement instruments 11 and a measuring cost generated by leakage detection during a measuring time identified by detection performance identifying unit 110. In the present example embodiment, a diagnosis cost indicates an expense required when degradation diagnosis using diagnosis device 10 is performed for pipe 1 of a specific extension. A diagnosis cost with respect to an installation spacing of measurement instruments 11 is a diagnosis cost generated when an installation spacing of measurement instruments 11 is set as any spacing. In this case, pipe 1 to be a target of output of a diagnosis cost may include a plurality of pipes as in a water supply network. An expense, being a diagnosis cost, required when degradation diagnosis of pipe 1 using diagnosis device 10 is performed, mainly includes an expense required for installing measurement instruments 11 and an expense required for leakage detection using measurement instrument 11 as described above.

As described above, when an installation spacing of a plurality of measurement instruments 11 becomes large, it may be possible to reduce a required number of measurement instruments 11. In other words, it may be possible to reduce an expense required for installing measurement instruments 11. On the other hand, an installation spacing of measurement instruments 11 is widened, and therefore a long time may be required for leakage detection.

Therefore, in diagnosis cost output device 100 according to the present example embodiment, output unit 120 outputs a diagnosis cost with respect to an installation spacing of measurement instruments 11 by using a measuring time identified by detection performance identifying unit 110. For more details, output unit 120 outputs a diagnosis cost, assuming that the diagnosis cost includes a sum of an expense required for installing measurement instruments 11 and an expense required for performing diagnosis such as leakage detection using measurement instrument 11.

When diagnosis costs with respect to various installation spacings of measurement instruments 11 are output by output unit 120, a diagnosis cost required when degradation diagnosis of a pipe using diagnosis device 10 is performed can be interpreted. As a result, an installation spacing of measurement instruments 11 in which a diagnosis cost is reduced is easily interpreted.

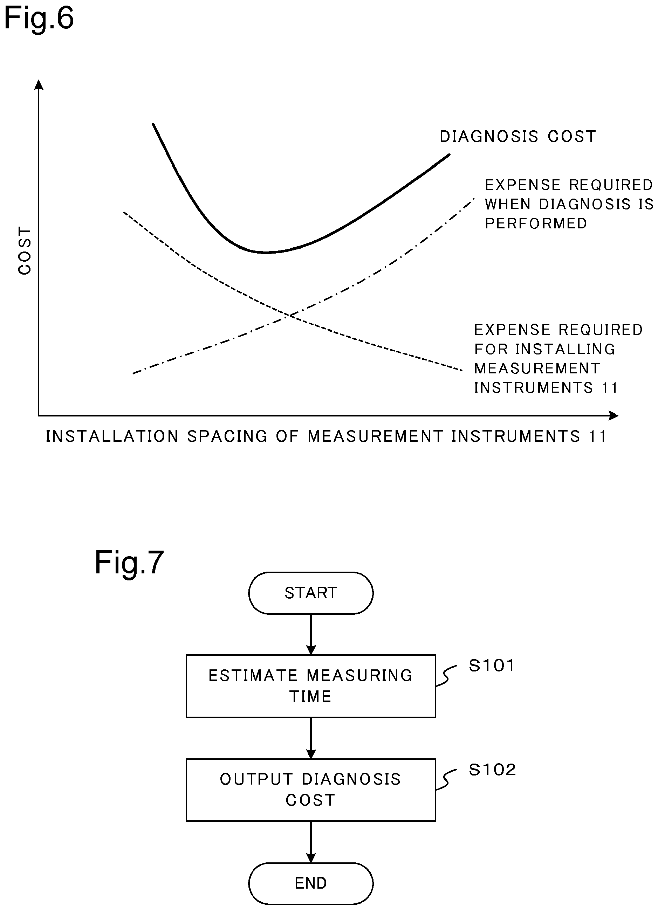

Fig. 6 is a conceptual diagram illustrating a relation of a diagnosis cost required for an installation spacing of measurement instruments 11. In a graph illustrated in Fig. 6, a horizontal axis represents an installation spacing of measurement instruments 11 and a vertical axis represents an expense. In the graph illustrated in Fig. 6, a solid line represents an example of a diagnosis cost that is output of output unit 120. A dotted line represents an expense required for installing measurement instruments 11. A dashed line represents an expense required when degradation diagnosis of pipe 1 using measurement instrument 11 is performed.

As described above, when an installation spacing of a plurality of measurement instruments 11 becomes large, the number of measurement instruments 11 per unit length of a pipe becomes small. When the number of measurement instruments 11 becomes small, an expense of measurement instruments 11 themselves and an expense required for installing measurement instruments 11 are reduced. Therefore, when an installation spacing of a plurality of measurement instruments 11 is widened, an expense required for installing measurement instruments 11 is reduced. Also, in the example of Fig. 6, a dotted-line graph indicates that an expense decreases with expansion of an installation spacing. As described above, an expense required for installing measurement instruments 11 includes, for example, a labor cost of personnel for installing measurement instruments 11, an expense of equipment used for installing measurement instruments 11, and other working costs.

On the other hand, when an installation spacing of a plurality measurement instruments 11 becomes large, a long time may be required for leakage detection as described above. As described above, an expense required for leakage detection using measurement instrument 11 includes a labor cost of personnel performing diagnosis, an operation cost of diagnosis device 10 or measurement instrument 11, and the like. When a long time is required for leakage detection, a labor cost according to a time is required. Therefore, when an installation spacing of a plurality of measurement instruments 11 becomes large, an expense required for leakage detection using measurement instrument 11 generally increases. Also, in the example of Fig. 6, a dashed-line graph indicates that an expense increases with expansion of an installation spacing.

The following equation (3) represents one example of an evaluation function relating to a diagnosis cost. It is assumed that a sum of an expense required for installing measurement instruments 11 and an expense required for leakage detection using measurement instrument 11 is included in a diagnosis cost. Equation (3) indicates a diagnosis cost required for degradation diagnosis for pipe 1 of a previously determined length with respect to an installation spacing 1 of measurement instruments 11. Output unit 120 outputs a diagnosis cost, for example, in accordance with equation (3).
[Math. 3]

$$j_{dia}(l) = \gamma_1 C_t(l) + \gamma_2 C_s(l) \quad \cdots (3)$$

$C_t(l)$ represents an expense required for installing measurement instruments 11. $C_t(l)$ is determined on the basis of an expense with respect to one measurement instrument 11 and the number of measurement instruments 11 installed in pipe 1. As one example, $C_t(l)$ is determined by multiplying an expense with respect to one measurement instrument 11 and the number of measurement instruments 11 installed in pipe 1. An expense with respect to one includes an expense of measurement instruments 11 themselves, an expense required for installing measurement instruments 11, and the like. The number of measurement instruments 11 installed in pipe 1 is determined, for example, by dividing a previously determined length by an installation spacing of measurement instruments 11.

$C_s(l)$ represents an expense required for leakage detection using measurement instrument 11. As one example, $C_s(l)$ is determined by multiplying an expense per unit time required for leakage detection and a measuring time required for leakage detection. An expense per unit time required for leakage detection includes a labor cost of personnel performing detection, an operation cost of diagnosis device 10 or measurement instrument 11, and the like. As a measuring time required for leakage detection, a result identified by detection performance identifying unit 110 described above is used.

In equation (3), $\gamma_1$ and $\gamma_2$ each are a correction coefficient, $\gamma_1$ and $\gamma_2$ are appropriately determined, for example, according to a degree of contribution of each of an expense required for installing measurement instruments 11 and an expense required for leakage detection using measurement instrument 11 to a diagnosis cost. $\gamma_1$ and $\gamma_2$ may be appropriately determined according to a status of pipe 1 to be a target of degradation diagnosis and the like.

On the basis of an installation cost of measurement instruments 11 and a measuring cost generated by leakage detection during a measuring time required for an installation spacing of measurement instrument 11, output unit 120 outputs a diagnosis cost with respect to the installation spacing. Output unit 120 outputs a diagnosis cost, for example, with respect to each of pipes different in vibration propagation characteristics. In other words, a diagnosis cost is output according to each type of pipes 1 different in material, diameter, and the like. When a plurality of conditions are assumed for leakage detection of same pipe 1, such as a case in which as an expense per unit time required for leakage detection, a plurality of expenses according to a time zone are determined, output unit 120 outputs a diagnosis cost for each of a plurality of cases.

Information used in output unit 120 is stored, for example, on storage unit 150, similarly to information used in detection performance identifying unit 110. Information stored on storage unit 150 includes information relating to a type of pipe 1, information relating to an expense required for installing measurement instruments 11, information relating to an expense required for degradation diagnosis of pipe 1 through diagnosis device 10 using a result detected by measurement instrument 11, and the like. Output unit 120 appropriately acquires information referred to on storage unit 150 and outputs a diagnosis cost.

Information relating to an expense required for installing measurement instruments 11 includes, for example, a price with respect to one measurement instrument 11, a working cost required for installing measurement instruments 11 in pipe 1, and the like. When a plurality of types of measurement instruments 11 are used, a price with respect to one for each is included in information relating to an expense required for installing measurement instruments 11. A working cost required for installing measurement instruments 11 in pipe 1 includes a working cost according to a type of measurement instrument 11 and a place where measurement instrument 11 is installed.

Information relating to an expense required for degradation diagnosis such as leakage detection through diagnosis device 10 includes a labor cost per unit time required for degradation diagnosis, an operation cost of diagnosis device 10, and the like. When a labor cost per unit time required for degradation diagnosis is different depending on various conditions, the labor cost according to these conditions may be included in information relating to an expense required for degradation diagnosis through diagnosis device 10.

Output unit 120 may output a diagnosis cost according to various conditions different from the factors described above with respect to leakage detection. Output unit 120 may output, for example, a diagnosis cost according to a time zone in which measurement is performed by measurement instrument 11, similarly to when a measuring time is identified by detection performance identifying unit 110.

As described above, a labor cost of personnel required for measurement may change depending on a time zone in which diagnosis is performed. A labor cost upon night-time diagnosis tends to be higher than a labor cost upon daytime diagnosis. A time required for leakage detection may be different, depending on a time zone in which measurement is performed. For example, a time required for measurement upon daytime measurement may be longer than a time required for measurement upon night-time measurement since environmental noise is loud. Therefore, output unit 120 may output a diagnosis cost for each time zone in which diagnosis is performed.

When a diagnosis cost is output according to a time zone in which measurement is performed by measurement instrument 11, storage unit 150 may store information relating to an expense required for degradation diagnosis through measurement instrument 11 per unit time according to a time zone. Output unit 120 refers to these pieces of information and outputs a diagnosis cost for each time zone in which diagnosis is performed.

Information stored on storage unit 150 is not specifically limited. Information and the like relating to another expense required when a diagnosis cost is output by output unit 120 may be stored. Output unit 120 acquires information stored on storage unit 150 and outputs a diagnosis cost, as necessary.

Output unit 120 may output a diagnosis cost on the basis of a condition different from the conditions described above. In other words, output unit 120 may output, by using information relating to other factors different from an expense required for installing measurement instruments 11 and an expense required for leakage detection using measurement instrument 11, a diagnosis cost while considering these other factors. In this case, other factors are appropriately determined according to an operation status of a water supply utility that possesses pipe 1, another status relating to pipe 1, and the like.

Output unit 120 further determines a diagnosis cost with respect to an installation spacing of measurement instruments 11 included, for example, in a range of the detectable distance described above. Output unit 120 outputs a diagnosis cost exclusively with respect to an installation spacing included in a range of a detectable distance, and thereby an installation spacing of measurement instruments 11 determined on the basis of the output diagnosis cost is included in a range of the detectable distance described above. In other words, output unit 120 outputs a diagnosis cost in a range where a presence/absence of leakage can be determined by diagnosis device 10.

Next, by using a flowchart illustrated in Fig. 7, one example of an operation of diagnosis cost output device 100 according to the first example embodiment of the present invention is described.

Detection performance identifying unit 110 identifies a measuring time with respect to an installation spacing of measurement instruments 11 on the basis of information affecting vibration propagation characteristics of pipe 1 (step S101). Information affecting vibration propagation characteristics relating to pipe 1 or the like is previously acquired appropriately upon execution of the present step.

Output unit 120 outputs, on the basis of an installation cost of measurement instruments 11 and a measuring cost generated by leakage detection during the measuring time identified in step S101 and the like, a diagnosis cost for the measuring time (step S102). Output unit 120 appropriately acquires an expense required for installing measurement instruments 11, an expense per unit time required for degradation diagnosis through diagnosis device 10 using a result of measurement instrument 11, and the like from storage unit 150 and outputs a diagnosis cost.

When it is necessary to acquire a diagnosis cost with respect to a plurality of measurement conditions or the like, processing of steps S101 and S102 described above may be appropriately executed repeatedly.

As described above, diagnosis cost output device 100 according to the first example embodiment of the present invention outputs a diagnosis cost necessary upon degradation diagnosis through diagnosis device 10.

A diagnosis cost changes, depending on an installation spacing of measurement instruments 11 included in diagnosis device 10. A measuring time changes, depending on an installation spacing of measurement instruments 11. A measuring time of measurement instrument 11 affects an expense required for degradation diagnosis of pipe 1 such as leakage detection through diagnosis device 10 using a result of measurement through measurement instrument 11. Therefore, in diagnosis cost output device 100, detection performance identifying unit 110 identifies a measuring time with respect to an installation spacing of measurement instruments 11. Output unit 120 outputs a diagnosis cost on the basis of an expense required for installing measurement instruments 11 and an expense required for performing degradation diagnosis of pipe 1 such as leakage detection through diagnosis device 10.

Therefore, diagnosis cost output device 100 can output a diagnosis cost considering a cost required for installing measurement instruments and a cost required for performing degradation diagnosis of a pipe using a result of measurement through the measurement instrument.

When diagnosis cost output device 100 is used, a diagnosis cost can be interpreted, for example, in a preinstallation stage of installation of measurement instrument 11. When degradation diagnosis of pipe 1 using diagnosis device 10 is performed, measurement instrument 11 can be installed at an installation spacing in which a diagnosis cost is reduced. In other words, diagnosis cost output device 100 can reduce a diagnosis cost when degradation diagnosis of pipe 1 using diagnosis device 10 is performed.

Diagnosis cost output device 100 considers a detectable distance. Therefore, a diagnosis cost in a range where leakage detection is possible can be output by diagnosis device 10.

(Second Example Embodiment)

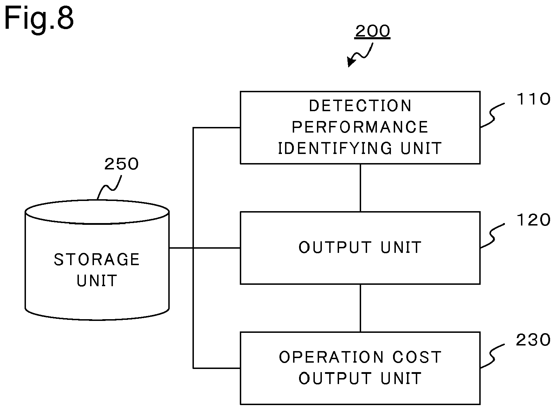

Next, a second example embodiment of the present invention is described. Fig. 8 is a diagram illustrating a diagnosis cost output device according to the second example embodiment of the present invention. As illustrated in Fig. 8, diagnosis cost output device 200 according to the second example embodiment of the present invention includes detection performance identifying unit 110, output unit 120, and operation cost output unit 230.

In diagnosis cost output device 200, detection performance identifying unit 110 and output unit 120 are elements similar to corresponding elements included in diagnosis cost output device 100 according to the first example embodiment described above. Operation cost output unit 230 outputs an operation cost with respect to an installation spacing of measurement instruments 11, on the basis of a diagnosis cost and a cost reduced by leakage detection in pipe 1. In the present example embodiment, an operation cost indicates an expense considering a cost further reduced by leakage detection relative to the diagnosis cost described above.

As illustrated in Fig. 8, diagnosis cost output device 200 may include storage unit 250. Storage unit 250 stores information similar to information in storage unit 150 in the first example embodiment. Storage unit 250 also stores information necessary for outputting an operation cost.

Diagnosis cost output device 100 according to the first example embodiment outputs a diagnosis cost that is an expense required for degradation diagnosis such as degradation detection through diagnosis device 10. In other words, diagnosis cost output device 100 determines an expense directly required upon degradation diagnosis. When various conditions are compared, an expense directly required for degradation diagnosis through diagnosis device 10 can be reduced.

On the other hand, when diagnosis device 10 diagnoses that degradation of pipe 1 such as leakage exists, generally, a point where it is diagnosed that leakage or the like of pipe 1 is occurring, is repaired. As a result, compared with when degradation such as leakage is not detected and then is left untreated, a cost generated due to degradation such as leakage may be reduced by performing repair of pipe 1 such as repair of a leakage hole.

When, for example, pipe 1 is a water-supply water pipe and there is leakage hole 3 in pipe 1 due to degradation, pipe 1 is repaired, and thereby a loss of water due to leakage is suppressed. Therefore, an expense required for water generation and water distribution with respect to leaked water is reduced. When degradation diagnosis is performed by diagnosis device 10, degradation of pipe 1 such as leakage may be detected in a minimal stage. In this case, compared with when degradation of pipe 1 is detected in a progressed stage and when degradation further progresses and breakage or the like occurs in pipe 1, it may be possible to reduce an expense required for repairing pipe 1.

In other words, when pipe 1 is a water-supply water pipe, degradation diagnosis of pipe 1 such as leakage detection is performed by diagnosis device 10, and thereby in the cases described above, it may be possible to reduce an expense required for repairing pipe 1.

Therefore, when an expense required for degradation diagnosis through diagnosis device 10 is examined, it may be desirable to consider, without limitation to the diagnosis cost described above, an expense that can be reduced by the diagnosis. In other words, it is possible to not only reduce a diagnosis cost determined by diagnosis cost output device 100 according to the first example embodiment but also further reduce an expense for the entire operation of pipe 1 by increasing an expense to be reduced.

Diagnosis cost output device 200 according to the present example embodiment determines a cost required for diagnosing pipe 1 by using an expense reduced by degradation diagnosis through diagnosis device 10 as one factor. In the present example embodiment, as described above, an expense considering a cost further reduced by degradation diagnosis such as leakage detection through diagnosis device 10 relative to a diagnosis cost is referred to as an operation cost. An operation cost is determined, for example, by subtracting a cost reduced by degradation diagnosis such as leakage detection through diagnosis device 10 from a diagnosis cost.

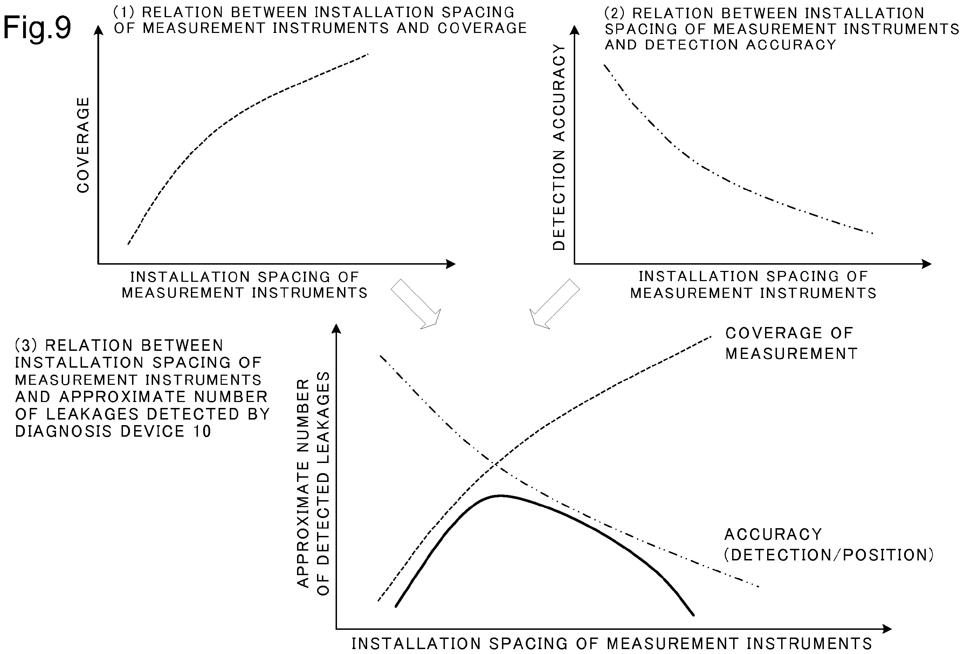

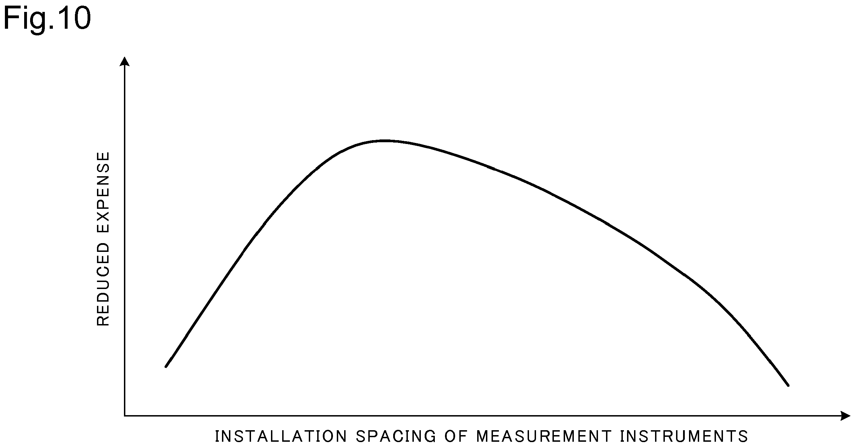

Hereinafter, with reference to Figs. 9 and 10, an expense reduced by degradation diagnosis through diagnosis device 10 is described.

As described above, in the present example embodiment, it is assumed, as one example, that diagnosis device 10 mainly regards a presence/absence of leakage of fluid from pipe 1 as a target of degradation diagnosis. In this case, it is assumed that an expense that can be reduced by degradation diagnosis of pipe 1 through diagnosis device 10 generally changes, depending on the number of leakages detected by diagnosis device 10. It is assumed that the number of leakages detected by diagnosis device 10 is related to an installation spacing of measurement instruments 11. First, a relation between an installation spacing of measurement instruments 11 and the number of detected leakages is described.

As one example, when the number of measurement instruments 11 attached to pipe 1 is previously determined as being constant, a range of pipe 1 to be a target of degradation diagnosis through diagnosis device 10 is increased when an installation spacing of measurement instruments 11 is widened. In other words, as illustrated in a conceptual diagram of Fig. 9(1), when an installation spacing of measurement instruments 11 is widened, a ratio of pipe 1 to be a target of degradation diagnosis through diagnosis device 10 is increased. In other words, a coverage of degradation diagnosis through diagnosis device 10 is increased. Therefore, from a point of view of a coverage of degradation diagnosis, it is assumed that when, for example, the number of measurement instruments 11 is previously determined as being constant as described above, expansion of an installation spacing of measurement instruments 11 is a factor for increasing the number of leakages detected by diagnosis device 10.

In the present example embodiment, a coverage indicates a ratio of an extension of pipe 1 actually diagnosed by diagnosis device 10 by using measurement instrument 11 attached to pipe 1 to a total extension of pipe 1 that can be a target of diagnosis through diagnosis device 10. When, for example, pipe 1 is a water-supply water pipe, a total extension of pipe 1 corresponds to an entire length of pipe 1 managed by a specific water supply utility. A value acquired by dividing pipe 1 actually diagnosed by using measurement instrument 11 attached to pipe 1 by the above-described length of an extension is a coverage.

On the other hand, when an installation spacing of measurement instruments 11 is large, it may be necessary to detect leakage having occurred in a place separate from a place where measurement instrument 11 is attached. As described above, a leakage vibration that propagates along a pipe and in fluid flowing inside the pipe is attenuated according to a distance from a point where leakage has occurred. Therefore, a magnitude of a leakage vibration generated in a point separate from measurement instrument 11 may decrease in a stage of arrival at measurement instrument 11.

As a result, as described above, it may be necessary to take a long time for measurement and the like through measurement instrument 11. When an installation spacing of measurement instruments 11 becomes large, a presence/absence of leakage may not always be determined by diagnosis device 10 correctly. Also when a presence/absence of leakage is correctly determined, it may be difficult to perform diagnosis such as identification of a position where leakage has occurred. In other words, when an installation spacing of measurement instruments 11 is widened, erroneous detection may be increased with respect to diagnosis of a presence/absence of leakage through diagnosis device 10.

Erroneous detection includes a case in which it is difficult to detect leakage since a vibration detected by measurement instrument 11 is small or the like although leakage or the like is occurring in pipe 1. A case in which noise or the like detected by measurement instrument 11 is detected as leakage although leakage is not occurring in pipe 1, and the like can be included as erroneous detection. Also when leakage is correctly detected, a case in which an error of a position identified as a position where leakage has occurred has a magnitude exceeding a certain degree can be included in erroneous detection.

Fig. 9(2) is a conceptual diagram illustrating a relation between an installation spacing of measurement instruments 11 and detection accuracy through diagnosis device 10. When an installation spacing of measurement instruments 11 is widened, detection accuracy through a diagnosis device tends to decrease. As a result, from a point of view of detection accuracy of diagnosis, it is assumed that when an installation spacing of measurement instruments 11 is widened, the number of leakages detected by diagnosis device 10 tends to decrease.

In the present example embodiment, detection accuracy indicates a ratio of leakages in which a presence/absence of leakage and a place where the leakage has occurred (i.e. a place where leakage hole 3 has been generated) are appropriately diagnosed by diagnosis device 10 to leakages of pipe 1 detectable by diagnosis device 10. Detection accuracy generally changes, depending on a distance from measurement instrument 11 to a position where leakage has occurred in pipe 1.

When two factors that are the coverage and detection accuracy described above are considered, it is assumed that the number of leakages detected by diagnosis device 10 is determined according to a coverage and detection accuracy among leakages occurring in pipe 1. It is assumed that, for example, a ratio (hereinafter, referred to as a "detection rate") of leakages detected by diagnosis device 10 to leakages occurring in pipe 1 follows a product of a coverage and detection accuracy.

It is assumed that an approximate number of leakages in the whole of pipe 1 assumed to be detected by diagnosis device 10 is determined on the basis of a detection rate and the number of leakages predicted to occur in the whole of pipe 1. In other words, it is assumed that an approximate number of leakages in the whole of pipe 1 substantially corresponds to a product of a detection rate and the number of leakages predicted to occur in the whole of pipe 1. A relation between an installation spacing of measurement instruments 11 and an approximate number of leakages detected by diagnosis device 10 in the whole of pipe 1 is represented, for example, as in Fig. 9(3).

In other words, when an installation spacing of measurement instruments 11 is widened, a coverage of measurement tends to increase as described above. In this case, it is assumed that detection accuracy tends to decrease but sufficient detection accuracy is maintained up to a certain degree of an installation spacing. In other words, it is assumed that when an installation spacing of measurement instruments 11 is widened, an approximate number of leakages to be detected tends to increase up to a certain degree of an installation spacing.

On the other hand, it is assumed that in an installation spacing of measurement instruments 11 exceeding a certain degree of an installation spacing, a coverage increases but an influence associated with a degree in detection accuracy is more actualized. In other words, it is assumed that when exceeding a certain degree of an installation spacing, an installation spacing of measurement instruments 11 is widened, and thereby the number of leakages to be detected tends to decrease.

Therefore, it is assumed that a detection rate is generally maximum in a specific installation spacing of measurement instruments 11 and tends to decrease before/after the installation spacing. A relation between an approximate number of leakages assumed to be detected by diagnosis device 10 in the whole of pipe 1 and an installation spacing of measurement instruments 11 is expressed, for example, as in Fig. 9(3). As expressed in Fig. 9(3), an expense reduced by diagnosis through diagnosis device 10 changes, depending on an installation spacing. A relation between an expense reduced by diagnosis through diagnosis device 10 and an installation spacing of measurement instruments 11 is a relation similar to the above-described relation between a detection rate and an installation spacing of measurement instruments 11.

An expense reduced by degradation diagnosis through diagnosis device 10 is determined on the basis of a product of an approximated number of leakages detected by diagnosis device 10 and an expense reduced by repairing leakage hole 3 having been a cause of leakage.

An approximate number of leakages detected by diagnosis device 10 is determined according to an installation spacing of measurement instruments 11, as described above. An expense reduced by repairing one leakage hole 3 includes, for example, an expense required for water generation and water distribution with respect to a water quantity a loss of which has been suppressed by repairing leakage. An expense reduced by repairing one leakage hole 3 may include an expense reducible by preventing breakage of pipe 1 referred to also as burst, and the like. These expenses are calculated, for example, on the basis of past results and the like upon occurrence of leakage from pipe 1.

When, for example, an expense reduced by repairing one leakage hole 3 is fixed, an expense reduced by diagnosis through diagnosis device 10 is expressed as in a graph illustrated in Fig. 10. In the graph illustrated in Fig. 10, a horizontal axis represents an installation spacing of measurement instruments and a vertical axis represents an expense reduced by diagnosis through diagnosis device 10. A shape of the graph illustrated in Fig. 10 is a shape substantially similar to that in Fig. 9(3).

Operation cost output unit 230 determines, when outputting an operation cost, an expense reduced by diagnosis through diagnosis device 10. When an expense reduced by diagnosis through diagnosis device 10 is determined, the detection rate described above is used. Therefore, operation cost output unit 230 first determines a coverage and detection accuracy.

A coverage is determined on the basis of a total extension of pipe 1 and the number of measurement instruments 11 attached to pipe 1. Operation cost output unit 230 determines, as a coverage, for example, a ratio of a product of the number of measurement instruments 11 attached to pipe 1 and an installation spacing of measurement instruments 11 to a total extension of pipe 1. In other words, a coverage represents, in a total extension of pipe 1, an extension in which a leakage vibration can be detected by measurement instrument 11.

Operation cost output unit 230 determines a coverage by changing an installation spacing of measurement instruments 11. When information relating to the detectable distance described above can be acquired, operation cost output unit 230 may determine a coverage in a range detectable by measurement instrument 11. In this case, operation cost output unit 230 determines a coverage in such a way that an installation spacing of measurement instruments 11 falls within a range equal to or smaller than a detectable distance. Operation cost output unit 230 may consider a type and the like of pipe 1 attached with measurement instrument 11 when determining a coverage.

Detection accuracy changes, depending on an attenuation characteristic $\alpha$ determined for each type of pipe 1, a detectable distance, a parameter relating to a detectable distance, and the like. Operation cost output unit 230 determines detection accuracy, for example, on the basis of information relating to characteristics of pipe 1 including an attenuation characteristic $\alpha$, a detectable distance or a parameter relating to a detectable distance, and the like.

Operation cost output unit 230 may determine detection accuracy on the basis of results in a pipe of the same type as pipe 1 to be a target. Operation cost output unit 230 determines detection accuracy on the basis of result values relating to statuses of leakage actually detected and erroneous detection in pipe 1 to be a target and a pipe in pipes of the same type as pipe 1. In this case, the result values are stored, for example, on storage unit 250 to be described later.

Operation cost output unit 230 may determine detection accuracy by appropriately combining these methods.

Information previously stored on storage unit 250 illustrated in Fig. 8 or the like is appropriately used as the above-described information of an attenuation characteristic $\alpha$, a detectable distance, a parameter relating to a detectable distance, result values, and the like. As one example, storage unit 250 stores information relating to detection accuracy in a table format according to a type of pipe 1, the detectable distance, and the like. In this case, operation cost output unit 230 determines detection accuracy by referring to a necessary part according to pipe 1 to be a target in information of a table format stored on storage unit 250. Operation cost output unit 230 may acquire these pieces of information, as necessary, via a communication network or the like. Storage unit 250 is configured, similarly to storage unit 150 in the first example embodiment.

When a coverage and detection accuracy are determined, a detection rate is determined on the basis of these. Operation cost output unit 230 sets, for example, a product of a coverage and detection accuracy as a detection rate. When a detection rate is determined, an approximate number of leakages detected by diagnosis device 10 is determined on the basis of the detection rate and the number of leakages that may actually occur in pipe 1.

Operation cost output unit 230 sets, for example, a product of a detection rate and an approximate number of leakages that may actually occur in pipe 1 as an approximate number of leakages detected by diagnosis device 10. An approximate number of leakages that may actually occur in pipe 1 is previously determined, for example, on the basis of results in a pipe of the same type as pipe 1 to be a target, aging of pipe 1 to be a target, and the like.

Operation cost output unit 230 may determine an approximate number of leakages that may actually occur in pipe 1 by using any model or the like, on the basis of conditions such as a type and aging of pipe 1, and a point where pipe 1 is embedded. Operation cost output unit 230 may determine also a coverage, detection accuracy, and a detection rate by using any model indicating a relation between elements relating to these.

When an approximate number of leakages is determined, an expense reduced by degradation diagnosis through diagnosis device 10 is determined on the basis of the approximate number of leakages and an expense reduced by repairing one leakage hole 3 having been a cause of leakage. For example, operation cost output unit 230 sets, as an expense reduced by degradation diagnosis through diagnosis device 10, a product of an approximate number of leakages that may actually occur in pipe 1 and an expense reduced by repairing one leakage hole 3 having been a cause of leakage.

When determining an expense reduced by performing degradation diagnosis by diagnosis device 10, operation cost output unit 230 outputs an operation cost. Operation cost output unit 230 determines an operation cost on the basis of a diagnosis cost determined by output unit 120 and an expense reduced by performing degradation diagnosis by diagnosis device 10. For example, operation cost output unit 230 sets, as an operation cost, a difference between a diagnosis cost determined by output unit 120 and the above-described expense reduced by performing degradation diagnosis by diagnosis device 10.

Degrees of contributions of a diagnosis cost and an expense reduced by performing degradation diagnosis by diagnosis device 10 to an operation cost may be different from each other. Therefore, when setting, as an operation cost, a difference between a diagnosis cost and an expense reduced by performing degradation diagnosis by diagnosis device 10, operation cost output unit 230 may provide coefficients to the diagnosis cost and the expense, and determine a difference.

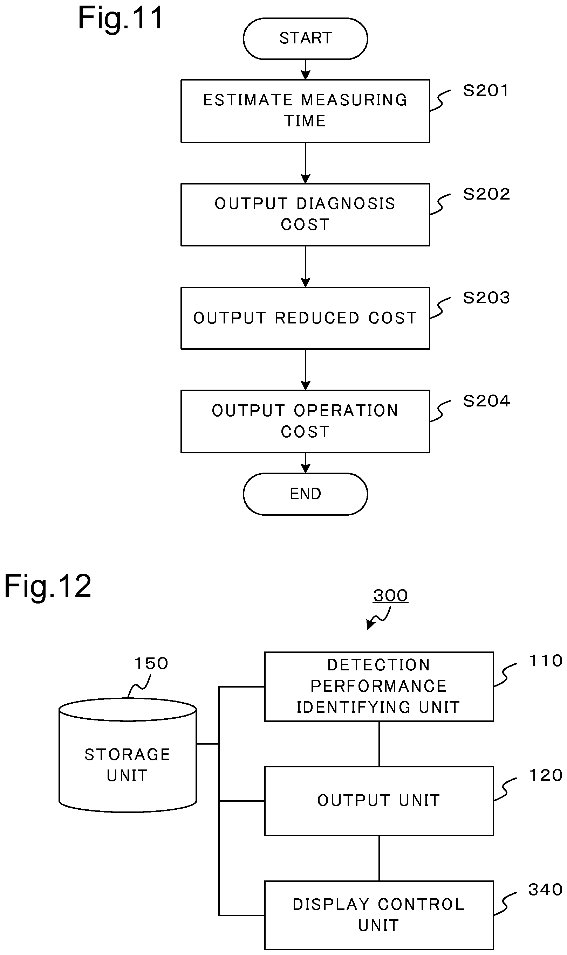

Next, by using a flowchart illustrated in Fig. 11, one example of an operation of diagnosis cost output unit 200 according to the second example embodiment of the present invention is described.

First, detection performance identifying unit 110 identifies a measuring time required for leakage detection (step S201). Output unit 120 outputs a diagnosis cost on the basis of the measuring time and the like identified in step S201 (step S202). The operations of steps S201 and S202 are executed, similarly to the operations in steps S101 and S102 of diagnosis cost output unit 100 according to the first example embodiment.

Next, operation cost output unit 230 determines an expense reduced by degradation diagnosis of pipe 1 such as leakage detection through diagnosis device 10 (step S203).

Next, operation cost output unit 230 outputs an operation cost on the basis of the diagnosis cost determined in step S202 and the expense reduced due to degradation diagnosis of pipe 1 determined in step S203 (step S204).

As described above, in diagnosis cost output device 200 according to the second example embodiment of the present invention, operation cost output unit 230 determines an expense reduced by degradation diagnosis of pipe 1 such as leakage detection through diagnosis device 10. Operation cost output unit 230 outputs an operation cost on the basis of an expense reduced by degradation diagnosis of pipe 1 through diagnosis device 10 and a diagnosis cost determined in output unit 120. In other words, diagnosis cost output device 200 outputs, when degradation diagnosis of pipe 1 such as leakage detection using diagnosis device 10 is performed, an operation cost considering, without limitation to a diagnosis cost, an expense required for operating pipe 1.

When an expense reduced by performing degradation diagnosis by diagnosis device 10 is large even in an installation spacing of measurement instruments 11 in which a diagnosis cost is not minimum, an advantage may be produced when a total expense required for maintaining pipe 1 is considered.

An operation cost output by diagnosis cost output device 200 according to the present example embodiment is a cost considering, without limitation to a diagnosis cost, an expense reduced by degradation diagnosis of pipe 1 through diagnosis device 10. In other words, when diagnosis cost output device 200 according to the present example embodiment is used, measurement instrument 11 can be installed in an installation spacing where an operation cost is reduced in which an expense reduced by degradation diagnosis of pipe 1 is considered.

(Third Example Embodiment)

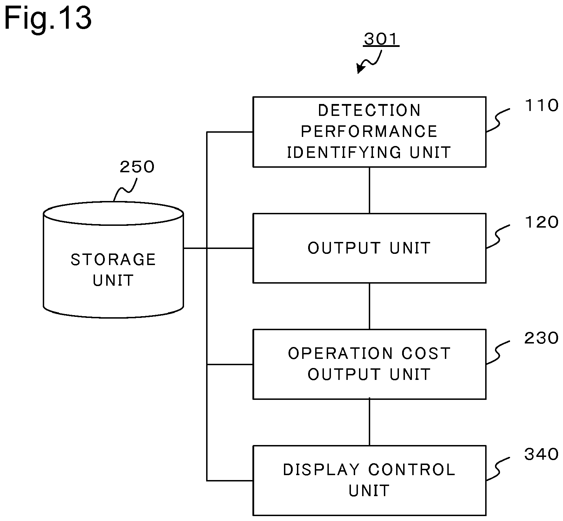

Next, a third example embodiment of the present invention is described. Fig. 12 is a diagram illustrating a diagnosis cost output device according to the third example embodiment of the present invention. As illustrated in Fig. 12, diagnosis cost output device 300 according to the third example embodiment of the present invention includes detection performance identifying unit 110, output unit 120, and display control unit 340. Detection performance identifying unit 110 and output unit 120 are elements similar to corresponding elements included in diagnosis cost output device 100 according to the first example embodiment described above. In other words, diagnosis cost output device 300 illustrated in Fig. 13 is different from diagnosis cost output device 100 according to the first example embodiment described above in that display control unit 340 is further included.

Display control unit 340 controls display of a diagnosis cost. Display control unit 340 may control display of information relating to information acquisition necessary for outputting a diagnosis cost in addition to a measurement condition.

In the present example embodiment, diagnosis cost output device 300 may include a configuration illustrated in Fig. 13. As illustrated in Fig. 13, diagnosis cost output device 301 according to the third example embodiment of the present invention includes detection performance identifying unit 110, output unit 120, operation cost output unit 230, and display control unit 340. Detection performance identifying unit 110 and output unit 120 are elements similar to corresponding elements included in diagnosis cost output device 100 according to the first example embodiment described above. Operation cost output unit 230 is an element similar to a corresponding element included in diagnosis cost output device 200 according to the second example embodiment described above. In other words, diagnosis cost output device 301 illustrated in Fig. 13 is different from diagnosis cost output device 200 according to the second example embodiment described above in that display control unit 340 is further included.

In diagnosis cost output device 301 illustrated in Fig. 13, display control unit 340 further controls display of an operation cost, in addition to the control described above. Display control unit 340 may control display of information relating to acquisition of information necessary when an operation cost is output.

In the present example embodiment, display control unit 340 controls display of at least a diagnosis cost as described above. For more details, display control unit 340 executes control in such a way as to display a diagnosis cost, an operation cost, and the like output by components of diagnosis cost output device 300. In this case, display control unit 340, for example, controls generating a screen indicating a diagnosis cost, an operation cost, and the like, and displaying the screen on a display device.

When display control unit 340 executes control in such a way as to display a diagnosis cost and an operation cost, display control unit 340 displays a diagnosis cost, an operation cost, and the like with respect to a specific installation spacing of measurement instruments 11. Display control unit 340 may execute control in such a way as to display a diagnosis cost, an operation cost, and the like with respect to each of a plurality of installation spacings of measurement instruments 11.

Display control unit 340 may execute control in such a way as to display a diagnosis cost, an operation cost, and the like in a graph format. Display control unit 340 executes control, for example, in such a way as to display the graph relating to a diagnosis cost illustrated in Fig. 6. Display control unit 340 may control in such a way as to display a graph relating to an operation cost.

Display control unit 340 further executes control in such a way as to display information used when a diagnosis cost and an operation cost are output.

Information used when a diagnosis cost is output includes, for example, an expense required for installing measurement instruments 11 and an expense required for leakage detection using measurement instrument 11. Information used when these expenses are determined may be included in information used when a diagnosis cost is output.

Information used when an operation cost is output includes, for example, an expense reduced by performing degradation diagnosis such as leakage detection by diagnosis device 10. An expense reduced by performing degradation diagnosis by diagnosis device 10 may be expressed in a format of a graph as illustrated in Fig. 10. Information necessary when an expense reduced by performing degradation diagnosis by diagnosis device 10 is determined may be included in information used when an operation cost is output. For example, information relating to a coverage of measurement or detection accuracy may be included in information used when an operation cost is output. These pieces of information may be expressed in a format of a graph as illustrated in Fig. 9.

Display control unit 340 may execute control in such a way as to display a screen for acquiring information necessary when a diagnosis cost and the like are output. For more details, display control unit 340 controls generating a screen for acquiring, for example, information necessary when a diagnosis cost and the like are output, and displaying the screen on a display device. Information necessary when a diagnosis cost and the like are output includes, for example, information for specifying a measurement condition and the like but is not specifically limited thereto. For example, information for specifying an installation spacing of measurement instruments 11 may be included in information necessary when a diagnosis cost and the like are output.

Information acquired via a screen controlled to be displayed by using display control unit 340 is stored, for example, on storage unit 150 or the like. When information is acquired via such a screen, components of diagnosis cost output device 300 outputs, on the basis of the acquired information, a diagnosis cost and an operation cost by further referring to necessary information from storage unit 150 or the like.

In the present example embodiment, it is assumed that a display device is, for example, a general display. However, a type of a display device is not specifically limited as long as it is able to display the information included in a screen and the like described above. A display device may be a display device included in another computer, smartphone, tablet, and the like connected via a communication network or the like.

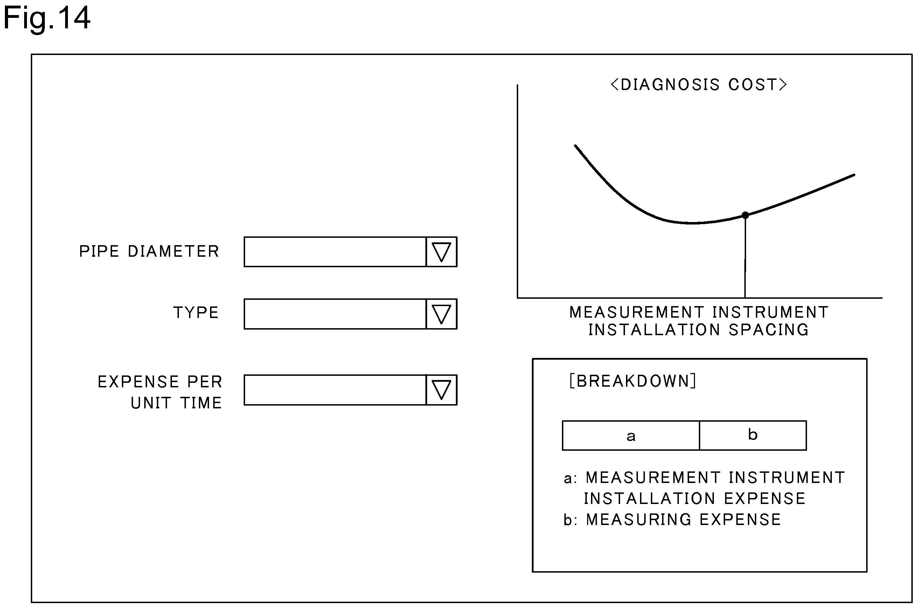

Fig. 14 is one example of a screen controlled to be displayed on a display device or the like by display control unit 340. In the example of the screen illustrated in Fig. 14, the above-described information for acquiring a measurement condition is included on a left side of the figure. In the information for acquiring a measurement condition, a "pipe diameter" represents a diameter of a pipe, a "type" represents a type of a pipe, and an "expense per unit time" represents an expense per unit time required for degradation diagnosis of pipe 1 such as leakage detection. These are expressed in a pull-down format in order to be selected by a user of diagnosis cost output device 300. When such a screen is output by display control unit 340, the information described above is acquired.

In the example of the screen illustrated in Fig. 14, information relating to a diagnosis cost is expressed on a right side of the figure. In this example, a diagnosis cost according to an installation spacing of measurement instruments 11 is expressed in a format of a graph. In a column of "breakdown", a breakdown of a diagnosis cost with respect to a specific installation spacing of measurement instruments 11 is indicated. A "measurement instrument installation expense" represents an expense required for installing measurement instruments 11. A "measuring expense" represents an expense required when degradation diagnosis of pipe 1 using measurement instrument 11 is performed.

Diagnosis cost output device 300 according to the present example embodiment operates in accordance with a flowchart illustrated in Fig. 7, Fig. 11, or the like. Display control unit 340 executes control in such a way as to display a screen for acquiring information necessary when a diagnosis cost and the like are output, for example, before the operation of step S101 or S201. Display control unit 340 executes control in such a way as to display, after the operation of step S102 or S204, a diagnosis cost and an operation cost which are output.

As described above, in diagnosis cost output device 300 or 301 according to the third example embodiment of the present invention, display control unit 340 executes control in such a way as to display a diagnosis cost, an operation cost, and the like on a display device. Display control unit 340 executes control in such a way as to display a screen for acquiring information necessary when a diagnosis cost and the like are output, as necessary. When doing in such a manner, a user of diagnosis cost output device 300 and the like easily interprets a diagnosis cost and an operation cost, specifies a measurement condition, and the like.

While the invention has been described with reference to the example embodiments thereof, the invention is not limited to the above described example embodiments. Various modifications that can be understood by those of ordinary skill in the art may be made to the configurations and details of the present invention without departing from the scope of the present invention, as defined by the appended claims.

This application is based upon and claims the benefit of priority from Japanese patent application No. 2017-45550, filed on March 10, 2017.

[Reference signs List]

| 1 | Pipe |
|---|---|
| 2 | Valve |
| 3 | Leakage hole |
| 10 | Diagnosis device |
| 11 | Measurement instrument |
| 100, 200, 300, 301 | Diagnosis cost output device |
| 110 | Detection performance identifying unit |
| 120 | Output unit |
| 230 | Operation cost output unit |
| 340 | Display control unit |
| 150, 250 | Storage unit |

## Claims

1. A diagnosis cost output device comprising:

   detection performance identifying means (110) for identifying a measuring time required for leakage detection with respect to an installation spacing of sensors (11), based on information affecting vibration propagation characteristics of a pipe (1), the information affecting vibration propagation characteristics of the pipe (1) including a time zone in which measurement is performed by the sensors (11); and
   output means (120) for outputting a diagnosis cost with respect to the installation spacing, based on an installation cost of the sensors (11) and a measuring cost, the measuring cost being a cost generated by leakage detection in the identified measuring time.

2. The diagnosis cost output device according to claim 1, wherein the output means (120) determines the measuring cost, based on the measuring time and an expense per unit time required for the leakage detection.

3. The diagnosis cost output device according to claim 1 or 2, wherein the output means (120) determines the installation cost with respect to the installation spacing.

4. The diagnosis cost output device according to any one of claims 1 to 3, wherein information affecting vibration propagation characteristics of the pipe (1) includes information of a pipe to be a target of the leakage detection, the information of the pipe (1) being at least one of a material, a wall thickness, a diameter, and a length of the pipe (1).

5. The diagnosis cost output device according to any one of claims 1 to 4, further comprising operation cost output means (230) for outputting an operation cost with respect to the installation spacing, based on the diagnosis cost and a cost reduced by the leakage detection.

6. The diagnosis cost output device according to claim 5, wherein the operation cost output means (230) identifies the operation cost, based on an approximate number of leakages and an expense reduced by repairing the leakage.

7. The diagnosis cost output device according to claim 6, wherein the operation cost output means (230) identifies an approximate number of leakages detected by the leakage detection, based on a coverage of the leakage detection and detection accuracy of the leakage detection.

8. The diagnosis cost output device according to any one of claims 1 to 7, further comprising display control means (340) for displaying the diagnosis cost.

9. A diagnosis cost output method comprising:

identifying a measuring time required for leakage detection with respect to an installation spacing of sensors (11), based on information affecting vibration propagation characteristics of a pipe (1), the information affecting vibration propagation characteristics of the pipe (1) including a time zone in which measurement is performed by the sensors (11); and
outputting a diagnosis cost with respect to the installation spacing, based on an installation cost of the sensors (11) and a measuring cost, the measuring cost being a cost generated by leakage detection in the identified measuring time.

10. A diagnosis cost program that causes a computer to execute the method according to claim 9.

**Patentansprüche**

1. Diagnosekosten-Ausgabevorrichtung, umfassend:

eine Erkennungsleistungs-Identifizierungseinrichtung (110) zum Identifizieren einer für eine Leckage-Erkennung erforderlichen Mess-Zeit in Bezug auf einen Installationsabstand von Sensoren (11) basierend auf sich auf Vibrationsausbreitungscharakteristiken eines Rohrs (1) auswirkender Information, wobei die sich auf Vibrationsausbreitungscharakteristiken des Rohrs (1) auswirkende Information eine Zeitzone enthält, in welcher eine Messung durch die Sensoren (11) durchgeführt wird; und
eine Ausgabeeinrichtung (120) zum Ausgeben von Diagnosekosten in Bezug auf den Installationsabstand basierend auf Installationskosten der Sensoren (11) und Messkosten, wobei die Messkosten durch Leckage-Erkennung in der identifizierten Mess-Zeit erzeugte Kosten sind.

2. Diagnosekosten-Ausgabevorrichtung nach Anspruch 1, wobei die Ausgabeeinrichtung (120) die Messkosten basierend auf der Mess-Zeit und einem für die Leckage-Erkennung erforderlichen Kostenaufwand pro Einheitszeit bestimmt.

3. Diagnosekosten-Ausgabevorrichtung nach Anspruch 1 oder 2, wobei die Ausgabeeinrichtung (120) die Installationskosten in Bezug auf den Installationsabstand bestimmt.

4. Diagnosekosten-Ausgabevorrichtung nach einem der Ansprüche 1 bis 3, wobei die sich auf Vibrationsausbreitungscharakteristiken des Rohrs (1) auswirkende Information Information über eine Rohr, das Ziel der Leckage-Erkennung sein soll, enthält, wobei die Information über das Rohr (1) wenigstens eines von einem Material, einer Wanddicke, eines Durchmessers und einer Länge des Rohrs (1) ist.

5. Diagnosekosten-Ausgabevorrichtung nach einem der Ansprüche 1 bis 4, die weiterhin eine Betriebskosten-Ausgabeeinrichtung (230) zum Ausgeben von Betriebskosten in Bezug auf den Installationsabstand basierend auf den Diagnosekosten und auf durch die Leckage-Erkennung reduzierten Kosten umfasst.

6. Diagnosekosten-Ausgabevorrichtung nach Anspruch 5, wobei die Betriebskosten-Ausgabeeinrichtung (230) die Betriebskosten basierend auf einer ungefähren Anzahl von Leckagen und einem durch Reparieren der Leckage reduzierten Kostenaufwand identifiziert.

7. Diagnosekosten-Ausgabevorrichtung nach Anspruch 6, wobei die Betriebskosten-Ausgabeeinrichtung (230) eine ungefähre Anzahl von durch die Leckage-Erkennung erkannten Leckagen basierend auf einer Reichweite der Leckage-Erkennung und einer Erkennungsgenauigkeit der Leckage-Erkennung identifiziert.

8. Diagnosekosten-Ausgabevorrichtung nach einem der Ansprüche 1 bis 7, die weiterhin eine Anzeige-Steuereinrichtung (340) zum Anzeigen von Diagnosekosten umfasst.

9. Diagnosekosten-Ausgabeverfahren, umfassend:

   Identifizieren einer für eine Leckage-Erkennung erforderlichen Mess-Zeit in Bezug auf einen Installationsabstand von Sensoren (11) basierend auf sich auf Vibrationsausbreitungscharakteristiken eines Rohrs (1) auswirkender Information, wobei die sich auf Vibrationsausbreitungscharakteristiken des Rohrs (1) auswirkende Information eine Zeitzone enthält, in welcher eine Messung durch die Sensoren (11) durchgeführt wird; und
   Ausgeben von Diagnosekosten in Bezug auf den Installationsabstand basierend auf Installationskosten der Sensoren (11) und Messkosten, wobei die Messkosten durch Leckage-Erkennung in der identifizierten Mess-Zeit erzeugte Kosten sind.

10. Diagnosekosten-Programm, das veranlasst, dass ein Computer das Verfahren nach Anspruch 9 ausführt.


**Revendications**

1. Dispositif de sortie de coût de diagnostic comprenant :

   un moyen d'identification de réalisation de détection (110) pour identifier un temps de mesure requis pour une détection de fuite vis-à-vis d'un espacement d'installation de capteurs (11), sur la base d'informations influençant des caractéristiques de propagation de vibrations d'un tuyau (1), les informations influençant des caractéristiques de propagation de vibrations du tuyau (1) comportant un fuseau horaire dans lequel une mesure est réalisée par les capteurs (11) ; et
   un moyen de sortie (120) pour fournir en sortie un coût de diagnostic vis-à-vis de l'espacement d'installation, sur la base d'un coût d'installation des capteurs (11) et d'un coût de mesure, le coût de mesure étant un coût généré par une détection de fuite dans le temps de mesure identifié.

2. Dispositif de sortie de coût de diagnostic selon la revendication 1, dans lequel le moyen de sortie (120) détermine le coût de mesure, sur la base du temps de mesure et d'une dépense par unité de temps requise pour la détection de fuite.

3. Dispositif de sortie de coût de diagnostic selon la revendication 1 ou 2, dans lequel le moyen de sortie (120) détermine le coût d'installation vis-à-vis de l'espacement d'installation.

4. Dispositif de sortie de coût de diagnostic selon l'une quelconque des revendications 1 à 3, dans lequel les informations influençant des caractéristiques de propagation de vibrations du tuyau (1) comportent des informations d'un tuyau destiné à être une cible de la détection de fuite, les informations du tuyau (1) étant au moins l'un parmi un matériau, une épaisseur de paroi, un diamètre, et une longueur du tuyau (1).

5. Dispositif de sortie de coût de diagnostic selon l'une quelconque des revendications 1 à 4, comprenant en outre un moyen de sortie de coût de fonctionnement (230) pour fournir en sortie un coût de fonctionnement vis-à-vis de l'espacement d'installation, sur la base du coût de diagnostic et d'un coût réduit par la détection de fuite.

6. Dispositif de sortie de coût de diagnostic selon la revendication 5, dans lequel le moyen de sortie de coût de fonctionnement (230) identifie le coût de fonctionnement, sur la base d'un nombre approximatif de fuites et d'une dépense réduite par la réparation de la fuite.

7. Dispositif de sortie de coût de diagnostic selon la revendication 6, dans lequel le moyen de sortie de coût de fonctionnement (230) identifie un nombre approximatif de fuites détectées par la détection de fuite, sur la base d'une couverture de la détection de fuite et d'une précision de détection de la détection de fuite.

8. Dispositif de sortie de coût de diagnostic selon l'une quelconque des revendications 1 à 7, comprenant en outre un moyen de commande d'affichage (340) pour afficher le coût de diagnostic.

9. Procédé de sortie de coût de diagnostic comprenant :

l'identification d'un temps de mesure requis pour une détection de fuite vis-à-vis d'un espacement d'installation de capteurs (11), sur la base d'informations influençant des caractéristiques de propagation de vibrations d'un tuyau (1), les informations influençant des caractéristiques de propagation de vibrations du tuyau (1) comportant un fuseau horaire dans lequel une mesure est réalisée par les capteurs (11) ; et
la fourniture en sortie d'un coût de diagnostic vis-à-vis de l'espacement d'installation, sur la base d'un coût d'installation des capteurs (11) et d'un coût de mesure, le coût de mesure étant un coût généré par une détection de fuite dans le temps de mesure identifié.

10. Programme de coût de diagnostic qui amène un ordinateur à exécuter le procédé selon la revendication 9.

Fig.1

Fig.2

Fig.3

Fig.4

# Fig.5

MEASURING TIME

INSTALLATION SPACING

# Fig.6

DIAGNOSIS COST

EXPENSE REQUIRED WHEN DIAGNOSIS IS PERFORMED

EXPENSE REQUIRED FOR INSTALLING MEASUREMENT INSTRUMENTS 11

COST

INSTALLATION SPACING OF MEASUREMENT INSTRUMENTS 11

# Fig.7

START

ESTIMATE MEASURING TIME — S101

OUTPUT DIAGNOSIS COST — S102

END

Fig.8

200

| DETECTION PERFORMANCE IDENTIFYING UNIT | 110 |

250

STORAGE UNIT

| OUTPUT UNIT | 120 |

| OPERATION COST OUTPUT UNIT | 230 |

# Fig.9

**(1) RELATION BETWEEN INSTALLATION SPACING OF MEASUREMENT INSTRUMENTS AND COVERAGE**

COVERAGE

INSTALLATION SPACING OF MEASUREMENT INSTRUMENTS

**(2) RELATION BETWEEN INSTALLATION SPACING OF MEASUREMENT INSTRUMENTS AND DETECTION ACCURACY**

DETECTION ACCURACY

INSTALLATION SPACING OF MEASUREMENT INSTRUMENTS

**(3) RELATION BETWEEN INSTALLATION SPACING OF MEASUREMENT INSTRUMENTS AND APPROXIMATE NUMBER OF LEAKAGES DETECTED BY DIAGNOSIS DEVICE 10**

COVERAGE OF MEASUREMENT

ACCURACY (DETECTION/POSITION)

APPROXIMATE NUMBER OF DETECTED LEAKAGES

INSTALLATION SPACING OF MEASUREMENT INSTRUMENTS

EP 3 594 653 B1

# Fig.10

REDUCED EXPENSE

INSTALLATION SPACING OF MEASUREMENT INSTRUMENTS

EP 3 594 653 B1

## Fig.11

```
                    ┌─────────────┐
                    │    START    │
                    └──────┬──────┘
                           │
            ┌──────────────────────────────┐
            │   ESTIMATE MEASURING         │  ⌇ S201
            │         TIME                 │
            └──────────────┬───────────────┘
                           │
            ┌──────────────────────────────┐
            │   OUTPUT DIAGNOSIS           │  ⌇ S202
            │        COST                  │
            └──────────────┬───────────────┘
                           │
            ┌──────────────────────────────┐
            │   OUTPUT REDUCED COST        │  ⌇ S203
            └──────────────┬───────────────┘
                           │
            ┌──────────────────────────────┐
            │   OUTPUT OPERATION           │  ⌇ S204
            │        COST                  │
            └──────────────┬───────────────┘
                           │
                    ┌─────────────┐
                    │     END     │
                    └─────────────┘
```

## Fig.12

300

```
  ┌──────────┐         ┌─────────────────────────┐
  │          │         │   DETECTION             │  ⌇ 110
  │ STORAGE  │─────────│   PERFORMANCE           │
  │  UNIT    │    │    │   IDENTIFYING UNIT      │
  │          │    │    └─────────────────────────┘
  │  150     │    │              │
  └──────────┘    │    ┌─────────────────────────┐
                  │────│   OUTPUT UNIT           │  ⌇ 120
                  │    └─────────────────────────┘
                  │              │
                  │    ┌─────────────────────────┐
                  │────│   DISPLAY CONTROL       │  ⌇ 340
                       │   UNIT                  │
                       └─────────────────────────┘
```

Fig.13

301

| DETECTION PERFORMANCE IDENTIFYING UNIT | 110 |

| OUTPUT UNIT | 120 |

| OPERATION COST OUTPUT UNIT | 230 |

| DISPLAY CONTROL UNIT | 340 |

250

STORAGE UNIT

# Fig.14

PIPE DIAMETER ▽

TYPE ▽

EXPENSE PER
UNIT TIME ▽

\<DIAGNOSIS COST\>

MEASUREMENT INSTRUMENT
INSTALLATION SPACING

[BREAKDOWN]

| a | b |
|---|---|

a: MEASUREMENT INSTRUMENT
   INSTALLATION EXPENSE
b: MEASURING EXPENSE

EP 3 594 653 B1

# Fig.15

EP 3 594 653 B1

**EP 3 594 653 B1**

## REFERENCES CITED IN THE DESCRIPTION

### Patent documents cited in the description

- US 20130262068 A
- JP 2015094665 A
- JP 2017045550 A